(19) Europäisches Patentamt
European Patent Office
Office européen des brevets

(11) EP 0 648 037 B1

(12) **FASCICULE DE BREVET EUROPEEN**

(45) Date de publication et mention de la délivrance du brevet:
**05.09.2001 Bulletin 2001/36**

(51) Int Cl.⁷: **H04L 27/22**

(21) Numéro de dépôt: **94402216.9**

(22) Date de dépôt: **04.10.1994**

(54) **Asservissement de phase, en bande de base**

Phasenabgleich im Basisband

Baseband phase tracking

(84) Etats contractants désignés:
**DE GB IT**

(30) Priorité: **08.10.1993 FR 9312027**

(43) Date de publication de la demande:
**12.04.1995 Bulletin 1995/15**

(73) Titulaire: **THOMSON-CSF**
**75008 Paris (FR)**

(72) Inventeur: **Laurent, Pierre André**
**F-92402 Courbevoie Cedex (FR)**

(74) Mandataire: **Lincot, Georges et al**
**Thomson-CSF Propriété Intellectuelle,**
**Département Brevets,**
**13, Avenue du Président Salvador Allende**
**94117 Arcueil Cédex (FR)**

(56) Documents cités:
**EP-A- 0 291 979** **EP-A- 0 349 064**
**FR-A- 2 670 967**

- **ELECTRONICS & COMMUNICATIONS IN JAPAN, PART I - COMMUNICATIONS, vol.73, no.6, Juin 1990, NEW YORK US pages 41 - 51 TOMOKI OHSAWA 'Block demodulation method for PSK signal by sequential regression estimator'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un procédé et un dispositif de démodulation cohérente par blocs de signaux complexes modulés en phase.

Elle s'applique aux transmissions de données numériques par voie radioélectrique avec faible rapport signal à bruit et décalage en fréquence variable dans le temps et notamment aux liaisons radioélectriques entre stations au sol via un satellite défilant.

Dans les systèmes de démodulation cohérente de modulations à 2 ou 4 états de phase, il est connu, pour améliorer les performances de transmission de messages de taille minimale en présence d'un fort niveau de bruit et d'un fort décalage en fréquence non constant (rampe Doppler), d'utiliser un codage de type convolutif consistant à émettre plus de symboles que ce qu'il est strictement nécessaire. Les codes utilisés le plus souvent sont des codes de redondance R = 2 ce qui conduit à un débit utile égal à la moitié du débit transmis, un bit d'information se traduisant par 2 bits transmis.

En théorie, le rapport signal/bruit énergétique par bit utile nécessaire pour obtenir un taux d'erreur de $10^{-5}$ est de l'ordre de 6 dB avec une marge de réalisation de 2 dB. Dans ces conditions, le rapport signal/bruit en entrée d'une démodulation de réception est de 6 dB - 10 $\log_{10}R$ soit 3 dB, ce qui est très faible. Cela impose, dans les systèmes classiques de faire précéder tout message d'une séquence de synchronisation initiale suffisamment longue pour que, même dans des conditions de propagation très défavorables, la démodulation se fasse dans de bonnes conditions.

Parmi les types de démodulation connus deux apparaissent utilisables, la démodulation dite "au fil de l'eau" et la démodulation par bloc.

Dans la démodulation "au fil de l'eau" des échantillons du signal sont fournis en continu à l'entrée du système de démodulation.

Le système de démodulation comporte classiquement, d'une part, une boucle à verrouillage de phase, destinée à estimer en continu la phase qu'aurait le signal en l'absence de modulation, pour donner une phase de référence, et d'autre part, un démodulateur, fournissant en sortie soit directement les valeurs de l'information décodée soit le signal complexe redressé. Dans ce système, l'organe le plus important est la boucle à verrouillage de phase, dont les caractéristiques sont le résultat d'un compromis entre la vitesse d'estimation, dont dépend le temps d'accrochage, et la "gigue" qui conditionne le taux d'erreur résiduel, ou dans le meilleur des cas, la dégradation des performances; par rapport au cas où la phase du signal serait parfaitement connue.

Dans la démodulation par blocs, des échantillons complexes du signal sont d'abord stockés dans une mémoire puis, quand ils sont en nombre suffisant, ceux-ci sont traités en bloc en une ou plusieurs passes. La construction des démodulateurs par blocs est récente car elle a été rendue possible par les progrès technologiques en matière de mémoires et de microprocesseurs de traitement de signal, seuls capables d'effectuer une démodulation complète sur les échantillons stockés en mémoire. un exemple de réalisation de démodulation mettant en oeuvre ce type de démodulation appliqué aux signaux PSK est décrit dans l'article de M. TOMOKI OHSAWA publié dans Electronics & Communications in JAPAN PART 1 - Communications Vol. 73 n° 6 Juin 1990, New-York US, pages 41-51 ayant pour titre "Block demodulation method for PSK signal by sequential regression estimator". Dans les systèmes à démodulation par blocs la démodulation a lieu en deux opérations successives, une première opération qui consiste à estimer la phase de référence du signal par mise en oeuvre d'algorithmes divers travaillant sur la totalité des échantillons stockés en mémoire et une deuxième opération consistant à corriger la phase des échantillons et décider la suite du traitement. La suite des traitements consiste par exemple à effectuer un décodage au maximum de vraisemblance, le plus souvent en faisant usage de l'algorithme de Viterbi, lorsque le signal comporte un code convolutif. La même structure de matériel est utilisée pour effectuer à la fois la démodulation et le décodage.

Une description d'un tel système, non compris le décodage correcteur, et la comparaison de ses performances avec celles d'un système plus classique sont décrits dans l'article intitulé "Block Demodulation for Short Radio Packets" de J. Namiki, Electronics and Communications in Japan, J67-B, N°1 (Janv. 1984) pp.54-61.

Comme indiqué dans l'article "Timing Extraction and Carrier Estimation for PSK Signal Block Demodulation System" de Y. Higashida, M. Hagiwara, N. Nakagawa, Electronics and Communications in Japan, J71-B, N°4 (Avr. 1988) pp.540-546, les systèmes de démodulation précédemment décrits ont d'énormes difficultés pour fonctionner à de très faible rapport signal/bruit et une évaluation des performances de ces systèmes montre clairement que le rapport signal/bruit minimal de fonctionnement est plus proche de 10 dB que de 3 dB. Qui plus est, les cas où le décalage Doppler varie au cours du temps ne sont pas traités.

Le but de l'invention est de pallier les inconvénients précités.

A cet effet, l'invention a pour objet un procédé de démodulation cohérente par bloc de suites de signaux complexes $S_n$ modulés en phase suivant des états de phase déterminés caractérisé en ce qu'il consiste à extraire la phase de chacun des signaux complexes en supprimant les sauts de phase inconnus, à rechercher dans la suite des phases obtenues une première plage de phase de longueur déterminée L pour laquelle la variation de phase est la plus linéaire possible, à déterminer une deuxième plage de phases de longueur $L_2$ supérieure à L correspondant à

une approximation linéaire plus précise, à effectuer itérativement des régressions linéaires à l'aide d'une fenêtre glissante de longueur égale à la deuxième plage de phase $L_2$ pour supprimer les sauts de phase résiduels pour effectuer une régression quadratique sur les phases restantes et pour calculer une estimation globale des phases de référence des signaux de chaque bloc, et à effectuer une comparaison de l'erreur quadratique moyenne entre les phases de référence estimées et les phases brutes obtenues par régression linéaire.

L'invention a pour principal avantage qu'elle permet, la recherche de la phase de référence avec une faible charge de calcul. Elle permet également de rendre minimum la dégradation des performances pour les très faibles rapports signal/bruit, en permettant une qualification de la qualité du signal reçu et d'affiner la synchronisation.

D'autres caractéristiques et avantages de l'invention apparaîtront ci-après à l'aide de la description et des dessins annexés qui représentent :

- La figure 1 un dispositif de modulation selon l'invention.
- La figure 2 les étapes principales du procédé selon l'invention mises sous la forme d'un organigramme.
- Les figures 3A et 3B des diagrammes comparatifs montrant les effets de la correction de phase selon l'invention.
- Les figures 4A et 4B des diagrammes de phases corrigées et d'erreur minimum pour un rapport signal/bruit de 3 dB.
- La figure 5 un exemple de droite de régression linéaire tracée sur une plage,étendue relativement à une plage initiale.
- La figure 6 une illustration du processus d'estimation finale des phases de référence par prolongement à droite et à gauche de la droite de régression.
- La figure 7 une représentation de phases corrigées initiales relativement à une régression quadratique des phases corrigées pour un rapport S/B = 3dB.
- La figure 8 une représentation de phases corrigées relativement à une régression quadratique des phases corrigées pour un rapport S/B de 0 dB.
- Les figures 9A, 9B, 9C, 9D des diagrammes de démodulation de signaux complexes à deux états de phase pour des rapports S/B de 3, 0, 6 et 10 dB.

Le dispositif de démodulation selon l'invention qui est décrit ci-après a une structure démodulateur par blocs. Il comporte un dispositif 1 de passage du signal S à démoduler en bande de base, un dispositif de mémorisation 2, un dispositif d'estimation de phase de référence 3 et un dispositif de démodulation et de décodage 4. Le dispositif 1 extrait de façon connue sur une fréquence intermédiaire FI les composantes réelles et imaginaires du signal complexe S à démoduler. Ce signal est formé par des suites de N échantillons $S_n$ complexe de la forme :

$$S_n = a \exp j\left(\theta_0 + 2\pi \Delta f\, n\, T + 2\pi\, d\Delta f \frac{(nT)^2}{2}\right) \exp j(\varphi_n) + Z_n,\ n = 1 \ldots N$$

où

a = amplitude
$\theta_0$ = phase initiale
$\Delta f$ = écart en fréquence initial
$d\Delta f$ = variation de l'écart en fréquence
$\varphi_n$ = phase porteuse de la modulation (M=2 ou 4 possibilités)
T= durée du symbole et intervalle d'échantillonnage
$Z_n$ = bruit gaussien complexe de puissance $2\sigma^2$ rapport signal/ bruit $S / B = \frac{a^2}{2\sigma^2}$

Le dispositif de mémorisation 2 est couplé en sortie du dispositif 1 et stocke "au vol" chaque bloc de N échantillons avant tout traitement.

Le dispositif 3 estime la phase de référence du signal qui ne dépend pas de l'information transmise, à partir des échantillons stockés dans le dispositif 2. Le dispositif 4 est couplé d'une part, en sortie du dispositif de mémorisation 2 et d'autre part, en sortie du dispositif 3 d'estimation de phase pour reconstituer des échantillons complexes redressés et reconstituer l'information utile transmise à partir des échantillons complexes stockés dans la mémoire 2 et des phases de référence fournies par le dispositif 3. Le dispositif 3 d'estimation de phase opère suivant les étapes 5 à 10 du procédé représenté à la figure 2. L'étape 5 consiste à calculer la phase du signal complexe S appliqué à l'entrée du dispositif 1 et corrige les phases en supprimant des sauts de phase inconnus dus à l'information qui le module.

L'étape 6 consiste à rechercher dans la série des phases délivrées à l'étape 5 un plage de phase de longueur L où la variation de phase paraît être la plus linéaire possible.

A l'étape 7 une plage de phases de largeur $L_2$ supérieure à L est recherchée correspondant à une approximation linéaire plus précise.

L'étape 8 effectue itérativement des régressions linéaires à l'aide d'une fenêtre glissante de longueur $L_2$ pour supprimer tous les sauts de phase résiduels.

L'étape 9 effectue une régression quadratique sur les phases obtenues à l'étape 8 pour calculer une estimation globale des phases de référence sur chaque bloc de N échantillons traités. Enfin l'étape 10 effectue une comparaison de l'erreur quadratique moyenne entre les phases de référence estimées à l'étape 9 et les phases brutes obtenues à l'étape 8, à une valeur de seuil déterminée.

La correction des phases qui est effectuée à l'étape 5 vise à la fois à supprimer l'influence de la modulation, qui se traduit par une incertitude de $\pi$ sur la phase de référence du signal et à supprimer l'effet des évaluations de phase qui ont toujours lieu à $2\pi$ près. Elle s'effectue elle-même en trois étapes de traitement. La première étape consiste à corriger les phases des échantillons $S_n$ en les ramenant par exemple dans l'intervalle

$$\left[-\frac{\pi}{2}, +\frac{\pi}{2}\right]$$

pour une modulation biphase 0 - $\pi$. Dans ce cas, si $P_n = \arg(S_n)$ est la phase comprise entre $-\pi$ et $+\pi$ du $n^e$ échantillon de signal, la correction a lieu en transformant $P_n$ pour n = 1 ... à N par les itérations suivantes :

- faire $Q_n = P_n$
- si $Q_n > \frac{\pi}{2}$ alors faire $Q_n = Q_n - \pi$
- si $Q_n < -\frac{\pi}{2}$ alors faire $Q_n = Q_n + \pi$

La deuxième étape consiste à calculer les différences de phase successives et à les ramener elles aussi entre $-\frac{\pi}{2}$ et $+\frac{\pi}{2}$.

L'algorithme correspondant consiste à poser

$D_n = Q_n - Q_{n-1}$ et pour n = 2 ... N

à faire $D_n = D_n - \pi$ si $D_n < -\frac{\pi}{2}$ ou à faire $D_n = D_n + \pi$ si $D_n < -\frac{\pi}{2}$

La troisième étape vise à reconstituer une suite de valeurs de phases $\Phi_n$ représentative (à une incertitude de $\pi$ près) de la phase de référence du signal.

L'algorithme correspondant consiste à poser :

$\Phi_1 = Q_1$ et à faire $\Phi_n = \Phi_{n-1} + Q_n$

pour n = 2 ... N.

Des valeurs respectives de $P_n$ et $\Phi_n$, pour un bon rapport signal/bruit de 20 dB et pour un mauvais rapport signal/bruit de 3 dB sont tracées respectivement sur les graphes des figures 3A-3B où les phases originales en radians de N = 100 échantillons sont tracées en traits pointillés et les phases corrigées apparaissent en trait plein.

Comme cela apparaît sur la figure 3B, les phases apparaissent beaucoup moins bien corrigées lorsque le rapport signal/bruit est de 3 dB, car les phases corrigées qui devraient en principe être quasi continues, présentent des sauts de phase résiduels de $\pi$ radians. Cependant, la figure 3B permet d'observer que les phases corrigées qui présentent des sauts de phase de $\pi$ comportent aussi des plages sans sauts. De plus, si le décalage en fréquence ne varie pas trop vite, la phase varie (presque) linéairement sur une telle plage. L'intérêt de cette constatation a de l'importance, car elle permet lorsqu'une plage sans sauts est repérée, de corriger les sauts de phase en la prolongeant de part et d'autre. Cette particularité est mise à profit par l'invention à l'étape 6 en recherchant dans la suite des phases corrigées, une plage de L valeurs successives approximativement réparties sur une droite et pouvant être approximées par une équation de la forme :

$$\Phi_{n_0+i} \approx Ai+B \text{ pour } i = 1, ..., L$$

$n_0$ étant le numéro de l'échantillon précédent immédiatement le début du bloc.

Par régression linéaire le minimum de l'erreur quadratique moyenne E donnée par

$$E(n_0) = \frac{1}{L}\sum_{i=1}^{L}\left(\Phi_{n_0+i} - (A\,i + B)\right)^2$$

est calculé.

Les valeurs A et B correspondant à ce minimum sont données par les relations :

$$A = \frac{P_1 S_0 - P_0 S_1}{\Delta}$$

$$B = \frac{P_0 S_2 - P_1 S_1}{\Delta}$$

avec

$$S_0 = L,\ S_1 = \sum_{i=1}^{L} i = \frac{L(L+1)}{2},\ S_2 = \sum_{i=1}^{L} i^2 = \frac{L(L+1)(2L+1)}{6}$$

$$\Delta = S_0\, S_2 - S_1^2$$

$$P_0 = \sum_{i=1}^{L} \Phi_{n_0+i},\ P_1 = \sum_{i=1}^{L} i\, \Phi_{n_0+i}$$

La valeur minimale de l'erreur est alors :

$$E_{min}(n_0) = \frac{1}{L}\left(\sum_{i=1}^{L} \Phi^2_{n_0+i} - A\,P_1 - B\,P_0\right)$$

Il suffit alors de calculer $E_{min}(n_0)$ pour $n_0$ = 0...N-L et de repérer la valeur de $n_0$ correspondant au minimum. La valeur de $n_0$ désigne la position du début de la plage où L échantillons successifs de phase corrigée sont le mieux approchés par une droite. Pour moins dépenser en puissance de calcul les différentes sommes faisant intervenir les phases $\Phi_n$ peuvent aussi être évaluées de proche en proche. La valeur de L doit alors être soigneusement choisie d'une part, suffisamment faible pour que, même avec un faible rapport signal/bruit, il soit quasiment certain de trouver une plage de phases corrigées quasi linéaires, sans saut de phase et d'autre part, suffisamment élevée pour que la régression linéaire donne un résultat suffisamment fiable. Pour un rapport signal/bruit minimum de 3 dB, une valeur de L de l'ordre d'une dizaine d'échantillons donne des résultats acceptables, comme le montrent les graphes de phase corrigée en radian et d'erreur quadratique moyenne des figures 4A et 4B où il apparaît que sur N = 100 échantillons, l'erreur est minimale avec un point de départ $n_0$ (offset) de 56 échantillons à partir de l'origine. Dans ces conditions c'est-à-partir de cette portion du signal qu'est cherchée l'estimation de la phase de référence.

La largeur de la plage L est définie pour avoir une probabilité suffisante de trouver une plage correcte. Cependant, comme les valeurs des coefficients de régression linéaire A et B correspondant au minimum d'erreur sont entachés eux aussi d'erreurs, ceux-ci sont estimés avec plus de précision en cherchant à élargir la plage L sur une longueur $L_2$. La longueur $L_2$ est fonction de la valeur de la rampe Doppler maximum admissible. Elle est choisie de telle sorte que l'erreur de linéarité reste négligeable, inférieure par exemple à la moitié de l'écart-type de l'erreur due au bruit.

Cependant comme l'élargissement de la plage initiale a pour les faibles rapports signal/bruit toutes les chances de conduire à prendre en compte des phases corrigées présentant des sauts de phase multiples de $\pi$, il est nécessaire pour s'accommoder de cette situation d'effectuer les opérations suivantes.

Tout d'abord, la plage en cours d'élargissement est supposée avoir une largeur $\ell$ supérieure ou égale à L et inférieure à une largeur $L_2$. Pour l'élargir d'une unité, les opérations consistent à calculer une valeur extrapolée $\Phi_e$ par approximation linéaire à partir des valeurs courantes de A et B, à modifier ensuite la phase corrigée $\Phi_n$, à prendre en compte en lui ajoutant ou en lui retranchant $\pi$rds le nombre de fois nécessaire pour que la différence $|\Phi_n - \Phi_e|$ soit minimale. La nouvelle valeur de $\Phi_n$ ainsi obtenue est alors utilisée pour remettre à jour les coefficients de régression

linéaire A et B.

Le processus d'élargissement peut commencer par exemple par un prolongement de la plage vers la gauche pour ensuite la prolonger vers la droite. L'algorithme à utiliser peut alors être le suivant :

Prolongement à gauche :

INITIALISATION :

Remettre les quantités $S_0$, $S_1$, $S_2$, $P_0$, $P_1$, A et B aux valeurs trouvées à la position $n_0$.

Faire $n = n_0$ (indice du premier échantillon à considérer à gauche)
Faire i = 0 (i vaudra 0, -1, -2, ..., $-(L_2-2)/2$)
Faire $n_g = MAX(1, MIN(n_0 - (L_2 - L) / 2 + 1, N - (L_2 - 1)))$
(ce sera le dernier indice utilisé).

ITERATION :

a : Si $n < n_g$ alors Fin (prolongation terminée)
b : $\Phi_e = A\, i + B$ (extrapolation)
c : Ramener $\Phi_n$ le plus près possible de $\Phi_e$ par ajout(s) ou retrait(s) de $\pi$
d : (mise à jour des coefficients de régression)

$$S_0 = S_0 +1, S_1 + i, S_2 + i^2$$

$$\Delta = S_0\, S_2 - S_1^2$$

$$P_0 = P_0 + \Phi_n, P_1 = P_1 + i\Phi_n$$

$$A = \frac{P_1S_0-P_0S_1}{\Delta}$$

$$B = \frac{P_0S_2-P_1S_1}{\Delta}$$

e: n = n - 1

i = i - 1
Aller en a

Prolongement à droite :

INITIALISATION :

Remettre les quantités $S_0$, $S_1$, $S_2$, $P_0$, $P_1$, A et B aux valeurs trouvées à la position $n_0$.

Faire $n = n_0 + 1$ (indice du premier échantillon à considérer à droite)
Faire i = L + 1 (i vaudra L + 1, L + 2, ..., $L +(L_2-L)/2$)

ITERATION :

a : Si $n > n_g + L2 - 1$ alors Fin (prolongation terminée)
b : $\Phi_e = A\,i + B$ (extrapolation)
c : Ramener $\Phi_n$ le plus près possible de $\Phi_e$ par ajout(s) ou retrait(s) de $\pi$
d : (mise à jour des coefficients de régression)

$$S_0 = S_0 + 1, S_1 + i, S_2 + i^2$$

$$\Delta = S_0\,S_2 - S_1^2$$

$$P_0 = P_0 + \Phi_n, P_1 = P_1 + i\,\Phi_n$$

$$A = \frac{P_1S_0 - P_0S_1}{\Delta}$$

$$B = \frac{P_0S_2 - P_1S_1}{\Delta}$$

e: n=n+1

i=i+1
Aller en a

En fin d'exécution de l'algorithme, les coefficients de régression linéaire A et B valables pour une plage de largeur $L_2$ contenant la plage initiale de largeur L sont disponibles.
La figure 5 montre les droites de régression linéaire obtenues dans le même référentiel que celui des figures 3A et 3B correspondant aux deux plages de l'exemple précédent (la plage initiale L étant repérée par deux traits en tirets parallèles).
L'estimation finale de la phase de référence a lieu par l'exécution des étapes 8 et 9. Comme la longueur $L_2$ a été choisie la plus grande possible, le reste des estimations de phase est exécuté à l'aide d'une fenêtre glissante de largeur $L_2$ pour corriger les sauts de phase. La fenêtre trouvée de largeur $L_2$ trouvée à l'étape 7 incorpore les échantillons de rang $n_g$ à $n_g + L_2 - 1$ si $L_2$ est inférieur ou égal au nombre N d'échantillons. L'étape 8 consiste à faire glisser la fenêtre à gauche puis à droite. Ce glissement s'effectue suivant trois modes opératoires consistant, à calculer une valeur nominale extrapolée $\Phi_e$ de la phase, à effectuer une correction de chaque phase $\Phi_n$ et à effectuer une mise à jour de la régression linéaire.
Pour le glissement à gauche l'algorithme à exécuter est le suivant :

INITIALISATION :

Remettre quantités $S_0$, $S_1$, $S_2$, $P_0$, $P_1$, A et B aux valeurs trouvées à la fin de détermination initiale de la fenêtre de largeur $L_2$.
Leurs valeurs sont :

$$A = \frac{P_1s_0 - P_0S_1}{\Delta}$$

$$B = \frac{P_0S_2 - P_1S_1}{\Delta}$$

avec

$$S_0 = L_2,\ S_1 = \sum_{i=1}^{L_2} i = \frac{L_2(L_2+1)}{2},\ S_2 = \sum_{i=1}^{L_2} i^2 = \frac{L_2(L_2+1)(2L_2+1)}{6}$$

$$\Delta = S_0\, S_2 - S_1^2$$

$$P_0 = \sum_{i=n_g}^{n_g+L_2-1} \Phi_i,\ P_1 = \sum_{i=n_g}^{n_g+L_2-1} (i-n_g+1)\Phi_i$$

Faire $n = n_g - 1$ (indice du premier échantillon à considérer à gauche)

ITERATION :

a : Si $n < 1$ alors Fin (plus d'échantillons à gauche)
b : $\Phi_e = B$ (extrapolation, pour $i = 0$)
c : Ramener $\Phi_n$ le plus près possible de $\Phi_e$ par ajout(s) ou retrait(s) de $\pi$
d : (mise à jour des coefficients de régression)

$$A = \frac{P_1 S_0 - P_0 S_1}{\Delta}$$

$$B = \frac{P_0 S_2 - P_1 S_1}{\Delta}$$

avec

$$P_0 = \sum_{i=n}^{n+L_2-1} \Phi_i,\ P_1 = \sum_{i=n}^{n+L_2-1} (i-n+1)\Phi_i$$

e: $n=n-1$

Aller en a
Pour le glissement à droite l'algorithme à exécuter est le suivant :

INITIALISATION :

Remettre quantités $S_0$, $S_1$, $S_2$, $P_0$, $P_1$, A et B aux valeurs trouvées à la fin de détermination initiale de la fenêtre de largeur $L_2$.
Faire $n = n_g + L_2$ (indice du premier échantillon à considérer à droite)

ITERATION :

a : Si n > N alors Fin (plus d'échantillons à droite)
b : $\Phi_e = A (L_2 + 1) + B$ (extrapolation, pour $i = L_2 + 1$)
c: Ramener $\Phi_n$ le plus près possible de $\Phi_e$ par ajout(s) ou retrait(s) de $\pi$rds.
d : (mise à jour des coefficients de régression)

$$A = \frac{P_1 S_0 - P_0 S_1}{\Delta}$$

$$B = \frac{P_0 S_2 - P_1 S_1}{\Delta}$$

avec

$$P_0 = \sum_{i=n}^{n+L_2-1} \Phi_i, P_1 = \sum_{i=n}^{n+L_2-1} (i-n+1)\Phi_i$$

e: n=n-1

Aller en a

Cependant pour ne pas dépenser en puissance de calcul, les calculs précédents peuvent encore être exécutés par un ajustement des différentes variables comme défini ci-après.
L'algorithme pour le glissement à gauche est alors le suivant :

INITIALISATION :

Remettre quantités $S_0$, $S_1$, $S_2$, $P_0$, $P_1$, A et B aux valeurs trouvées à la fin de détermination initiale de la fenêtre de largeur $L_2$.

Faire $n = n_g - 1$ (indice du premier échantillon à considérer à gauche)
Faire $i = n - n_0$

ITERATION

a : Si n < 1 alors Fin (plus d'échantillons à gauche)
b : $\Phi_e = A\,i + B$ (extrapolation)
c: Ramener $\Phi_n$ le plus près possible de $\Phi_e$ par ajout(s) ou retrait(s) de $\pi$rds
d : (mise à jour des coefficients de régression)

$$S_1 = S_1 + i - (i + L_2) = S_1 - L_2$$

$$S_2 = S_2 + i^2 - (i + L_2)^2 = S_2 - L_2(L_2 + 2i)$$

$$\Delta = S_2\,S_0 - S_1^2$$

$$P_0 = P_0 + \Phi_n - \Phi_{n+L_2},\ P_1 = P_1 + i\ \Phi_n - (i + L_2)\ \Phi_{n+L_2}$$

$$A = \frac{P_1 S_0 - P_0 S_1}{\Delta}$$

$$B = \frac{P_0 S_2 - P_1 S_1}{\Delta}$$

e: n=n-1
i = i - 1

L'algorithme pour le glissement à droite est le suivant :

INITIALISATION :

Remettre les quantités $S_0$, $S_1$, $S_2$, $P_0$, $P_1$, A et B aux valeurs trouvées à la fin de détermination initiale de la fenêtre de largeur $L_2$.

Faire $n = n_g + L_2$ (indice du premier échantillon à considérer à droite)
Faire $i = n - n_0$

ITERATION

a : Si n > N alors Fin (plus d'échantillons à gauche)
b : $\Phi_e = A\ i + B$ (extrapolation)
c: Ramener $\Phi_n$ le plus près possible de $\Phi_e$ par ajout(s) ou retrait(s) de $\pi$
d : (mise à jour des coefficients de régression) $S_1=S_1+i-(i+ L_2) = S_1 - L_2$

$$S_2 = S_2 + i^2 - (i + L_2)^2 = S_2 - L_2\ (L_2 + 2i)$$

$$\Delta = S_2\ S_0 - S_1^2$$

$$P_0 = P_0 + \Phi_n - \Phi_{n+L_2},\ P_1 = P_1 + i\ \Phi_n - (i + L_2)\ \phi_{n+L_2}$$

$$A = \frac{P_1 S_0 - P_0 S_1}{\Delta}$$

$$B = \frac{P_0 S_2 - P_1 S_1}{\Delta}$$

e: n = n - 1
i = i - 1

Aller en a

Les approximations linéaires locales de largeur $L_2$ ainsi obtenues permettent d'obtenir un jeu de N phases corrigées $\Phi_n$ où il n'y a plus de sauts de phase comme cela est représenté à la figure 6.

Le dernier traitement consiste, compte tenu du fait que le décalage Doppler varie dans le temps, à effectuer une régression quadratique sur les phases corrigées, ce qui suppose que le décalage Doppler varie quasi-linéairement.

Ce traitement consiste à approximer les phases par :

$$\Phi_n \approx An^2 + Bn + C, n = 1...N$$

et à minimiser l'erreur quadratique moyenne suivante :

$$E = \frac{1}{N}\sum_{n=1}^{N}\left(\Phi_n - \left(A\,n^2 + B\,n + C\right)\right)^2$$

La solution est donnée par :

$$A = \frac{P_0 S_2^2 - S_1 S_3) + P_1(S_0 S_3 - S_1 S_2) + P_2(S_1^2 - S_0 S_2)}{\Delta}$$

$$B = \frac{P_0(S_1 S_4 - S_2 S_3) + P_1(S_2^2 - S_0 S_4) + P_2(S_0 S_3 - S_1 S_2)}{\Delta}$$

$$C = \frac{P_0(S_3^2 - S_2 S_4) + P_1(S_1 S_4 - S_2 S_3) + P_2(S_2^2 - S_1 S_3)}{\Delta}$$

avec

$$S_0 = N,\ S_1 = \sum_{i=1}^{N} i = \frac{N(N+1)}{2},\ S_2 = \sum_{i=1}^{B} i^2 = \frac{N(N+1)\,(2\,N+1)}{6}$$

$$S_3 = \sum_{i=1}^{N} i^3 = \frac{N^2(N+1)^2}{4},\ S_4 = \sum_{i=1}^{N} i^4 = \frac{N(N+1)\,(2\,N+1)\left(3\,N^2 + 3\,N - 1\right)}{30}$$

$$\Delta = S_2^3 - 2\,S_1\,S_2\,S_3 + S_0\,S_3^2 + S_1^2\,S_4 - S_0\,S_2\,S_4$$

$$P_0 = \sum_{n=1}^{N}\Phi_n,\ P_1 = \sum_{n=1}^{N} n\,\Phi_n,\ P_2 = \sum_{n=1}^{N} n^2\,\Phi_n$$

et la valeur minimale obtenue est

$$E_{min} = \frac{1}{N}\left(\sum_{n=1}^{N}\Phi_n^2 - A\,P_2 - B\,P_1 - B\,P_0\right)$$

Les phases corrigées initiales, et l'approximation parabolique finale obtenues par le dernier traitement sont représentées figure 7.

Le coefficient B est égal à l'incrémentation de phase estimée pendant la durée d'un symbole, pendant le symbole (fictif) d'indice 0, soit $2\pi\ \Delta f\ T$.

Sa variance $\sigma_{\Delta f}2$ est de l'ordre de $192\ (\sigma/a)^2 / N^3$ (en radians), a étant l'amplitude du signal et $\sigma$ l'écart-type du bruit. Le rapport S/B est donné par: $S / B = a^2 / (2\sigma^2)$.

L'écart-type est approximativement égal à

$\sigma_{\Delta f} = (1 / 2(2 \pi T)) (96 / (N^3 S B))^{1/2}$. A titre d'exemple, pour 1 Kb/s, S/B = 3 dB et N = 2*100 bits transmis (100 bits utiles), $\sigma_{\Delta f}$ est de l'ordre de 0.4 Hz.

Cet exemple montre que, lorsqu'aucune erreur n'a été commise, la valeur minimale de l'erreur quadratique moyenne est faible. Pour un rapport S/B minimum de 3 dB, elle est en général inférieure à 0.2 radian$^2$. Par contre, lorsqu'une erreur est commise par une correction abusive de $\pi$rds, cette valeur minimale est proche de ou supérieure à la valeur théorique $\pi^2$ /12 = 0.82 radian$^2$, qui correspond à une erreur uniformément répartie entre $-\pi/2$ et $+\pi/2$.

Cette constatation permet de sélectionner les blocs reçus en fonction de $E_{min}$. Si cette quantité est inférieure à 0.3 (par exemple), le bloc est déclaré acceptable, sinon il est rejeté. Naturellement ce traitement peut toujours être recommencé avec une valeur de L plus faible (par exemple moitié moindre) afin d'augmenter les chances de trouver une plage de longueur L sans transition. La sélection permet aussi d'éliminer les messages ayant un trop mauvais rapport signal/bruit, comme le montre la figure 8 où S/B vaut 0 dB avec une valeur de $E_{min}$ supérieure à 0.3 (le signal d'entrée étant le même que précédemment, mais où la puissance du bruit a été multipliée par 2).

La phase finale de démodulation consiste à soustraire la phase de référence du signal reçu et donc à calculer :

$$S_n^d = S_n \exp j(-(A n^2 + B n + C)),\ n = 1...N$$

Une première constellation d'échantillons complexes ainsi obtenues par démodulation sur deux voies en quadratures est représentés à la figure 9A dans le cas d'un rapport signal à bruit SNR = 3 dB. Il n'y a qu'un bit erroné pour un écart moyen de 0,248943.

D'autres constellations obtenues avec des rapports S/B de 0 dB (moins bon), puis 6 et 10 dB (donc meilleurs) sont montrées respectivement aux figures 9B, 9C et 9D.

Dans les calculs précédents, les variances des coefficients de régression dépendent de la façon dont la phase $\Phi_n$ est approximée.

Dans l'approximation quadratique où $\Phi_n$ est de la forme $\Phi_n = A_3 n + B_3 n + C_3 + \varepsilon_n$ les variances des coefficients $A_3$, $B_3$ et $C_3$ sont données par les relations

$$\frac{V(A)}{\sigma_\varepsilon^2} \approx \frac{180}{N^5}$$

$$\frac{V(B)}{\sigma_\varepsilon^2} \approx \frac{192}{N^3}$$

et

$$\frac{V(C)}{\sigma_\varepsilon^2} \approx \frac{9}{N}$$

$\sigma_\varepsilon$ représente l'écart type et est voisin de $\frac{\sigma}{a}$ 1/ $(25/B)^{1/2}$

Lorsque l'approximation de $\Phi_n$ suit une loi de régression linéaire de la forme :

$$\Phi_n = A_2 n + B_2 + \varepsilon_n$$

Les variances sur les coefficients $A_2$ et $B_2$ sont données par les relations :

$$\frac{V(A)}{\sigma^2} \approx \frac{12}{N^3}$$

et

$$\frac{V(B)}{\sigma^2} \approx \frac{4}{N}$$

Dans l'approximation de $\Phi_n$ par une constante de la forme :

$$\Phi_n = A_1 + \varepsilon_b$$

on obtient :

$$\frac{V(A)}{\sigma_\sigma^2} = \frac{1}{N}$$

Les résultats précédents montrent que la variance de la constante est 4 fois plus importante dans l'approximation linéaire par une constante et 9 fois plus élevée pour l'approximation quadratique et qu'il faut travailler sur davantage d'échantillons à mesure que le nombre de coefficients de l'approximation augmente pour conserver les mêmes performances.

Si les phases corrigées sont de la forme

$$\Phi_n = A_3 n^2 + B_3 n + C_3$$

Le choix de la longueur de la fenêtre $L_2$ est déterminé en fonction de l'erreur maximale $e_{\ell in}$ obtenue par approximation linéaire, suivant la relation

$$e_{\ell in} = A_3(L_2 - 1)(L_2 - 2) / 6$$

Avec une rampe Doppler de dΔf Hz par seconde et une durée de symbole T, $A_3$ est égale à

$$A_3 = T^2 \, d\Delta f/2$$

Dans ces conditions pour obtenir une erreur $e_{\ell in}$ inférieure à X fois l'écart type des phases dû au bruit $\sigma_\varepsilon$, il suffit pour $L_2$ assez grand que $L_2$ vérifie la relation

$$L_2 < \frac{1}{T} \sqrt{\frac{12 - X}{d\Delta f \sqrt{2S/B}}}$$

Avec S/B = 3 dB, un rythme symbole de 1000 Hz et une rampe Doppler de 100 Hz par seconde, la relation précédente montre que $L_2$ doit être inférieur à 75 pour que l'erreur de linéarité ne dépasse pas le 1/10e de l'erreur due au bruit.

Bien que très performant, le procédé décrit précédemment peut encore être amélioré.

Par exemple, si dès la phase de recherche de la position de départ optimale, l'erreur quadratique minimale, est trop élevée, un autre essai peut encore être tenté avec une fenêtre de largeur L réduite en espérant trouver cette fois-ci un résultat convenable.

Comme il subsiste toujours une ambiguité de phase de π dans la détermination des phases de référence, il n'est pas possible de savoir a priori si la phase du premier échantillon de signal est 0 ou π puisque le bit modulant peut avoir l'une ou l'autre valeur 0 ou 1. Cette ambiguité peut être levée par tout procédé connu, comme par exemple celui consistant à insérer une séquence de K bits connue, ou un codage différentiel des données avant émission.

Bien entendu, le procédé et le dispositif qui viennent d'être décrits dans le cadre d'une modulation biphase s'appliquant aussi bien pour d'autres types de modulation de phase.

Par exemple, pour une modulation à 4 états de phase, appelée QPSK dans la littérature, les dispositifs 1, 3 et 4 peuvent être adaptés en corrigeant les phases et différences de phase dans le dispositif 3 pour les ramener entre $-\pi/4$ et $+\pi/4$ ; et pour corriger éventuellement $\Phi_n$ dans les dispositifs 3 et 4 par pas de $\pi/2$ et non pas $\pi$.

Pour une modulation MSK ou OQPSK, la seule modification à apporter consiste alors à multiplier par j tous les échantillons d'ordre impair par exemple.

Enfin, le procédé peut aussi être adapté pour affiner la synchronisation du récepteur.

En disposant de K échantillons par symbole, au lieu de 1 comme il a été supposé jusqu'ici, et donc de N.K échantillons au total, il suffit alors d'effectuer une démodulation complète à partir des échantillons 1, K+1, ..., etc., fournissant une valeur $E_{min}(1)$ ; une démodulation complète à partir des échantillons 2, K+2, ..., etc., fournissant une valeur $E_{min}(2)$ ; etc. et une démodulation complète à partir des échantillons K, 2 K, ..., etc., fournissant une valeur $E_{min}$ (K).

Dans ce cas seul le résultat de la démodulation de rang k qui fournit la plus faible valeur $E_{min}(k)$ est à retenir et le rang k désigne alors la position qui est la plus proche de la position de synchronisation idéale. Il est aussi possible éventuellement d'effectuer une interpolation de la valeur $E_{min}$ au voisinage de la $k^{ème}$ position pour affiner ce résultat.

## Revendications

1. Procédé de démodulation cohérente par bloc de suites de signaux complexes $S_n$ modulés en phase suivant des états de phase déterminés **caractérisé en ce qu**'il consiste à extraire (5) la phase de chacun des signaux complexes en supprimant les sauts de phase inconnus, à rechercher (6) dans la suite des phases obtenues une première plage de phase de longueur déterminée L pour laquelle la variation de phase est la plus linéaire possible, à déterminer (7) une deuxième plage de phases de longueur $L_2$ supérieure à L correspondant à une approximation linéaire plus précise, à effectuer (8) itérativement des régressions linéaires à l'aide d'une fenêtre glissante de longueur égale à la deuxième plage de phase $L_2$ pour supprimer les sauts de phase résiduels pour effectuer (9) une régression quadratique sur les phases restantes et pour calculer une estimation globale des phases de référence des signaux de chaque bloc, et à effectuer (10) une comparaison de l'erreur quadratique moyenne entre les phases de référence estimées et les phases brutes obtenues par régression linéaire.

2. Procédé selon la revendication 1 **caractérisé en ce que** la suppression (5) des phases inconnues consiste pour une modulation à deux états de phase (0-π) à corriger les phases des échantillons $S_n$ en les ramenant dans l'intervalle de phase

$$\left[-\frac{\pi}{2}, +\frac{\pi}{2}\right],$$

à calculer les différences de phase successives en les ramenant elles aussi dans l'intervalle de phase

$$\left[-\frac{\pi}{2}, +\frac{\pi}{2}\right]$$

et à reconstituer une suite $\Phi_n$ de valeurs de phases représentatives de la phase de référence du signal.

3. Procédé selon l'une quelconque des revendications 1 et 2 **caractérisé en ce qu**'il consiste pour rechercher la première plage de phase, à calculer par régression linéaire sur la longueur L l'erreur quadratique moyenne de phase en prenant successivement chacun des signaux $S_n$ comme origine et à choisir pour origine celui qui donne l'erreur quadratique moyenne minimum.

4. Dispositif de démodulation cohérente par bloc de suites de signaux complexes $S_n$ modulés en phase suivant des états de phase déterminés, **caractérisé en ce qu**'il comprend un dispositif de mémorisation (2) des signaux complexes couplés à un dispositif (3) d'estimation de la phase de référence du signal et un dispositif (4) couplé au dispositif (3) d'estimation de phase pour reconstituer les échantillons complexes et décoder l'information transmise par les échantillons, le dispositif (3) d'estimation de la phase de référence du signal étant programmé pour extraire (5) la phase de chacun des signaux complexes en supprimant les sauts de phase inconnus, rechercher (6) dans la suite des phases obtenues une première plage de phase de longueur déterminée L pour laquelle la variation de phase est la plus linéaire possible, déterminer (7) une deuxième plage de phases de longueur $L_2$ supérieure à L correspondant à une approximation linéaire plus précise, effectuer (8) itérativement des régressions linéaires

à l'aide d'une fenêtre glissante de longueur égale à la deuxième plage de phase $L_2$ pour supprimer les sauts de phase résiduels pour effectuer (9) une régression quadratique sur les phases restantes et pour calculer une estimation globale des phases de référence des signaux de chaque bloc, et effectuer (10) une comparaison de l'erreur quadratique moyenne entre les phases de référence estimées et les phases brutes obtenues par régression linéaire.

## Claims

1. Process for the blockwise coherent demodulation of strings of complex signals $S_n$ phase-modulated according to specified phase states, **characterized in that** it consists in extracting (5) the phase of each of the complex signals while eliminating the unknown phase jumps, in searching (6) through the string of phases obtained for a first phase span of specified length L for which the phase variation is as linear as possible, in determining (7) a second span of phases of length $L_2$ greater than L corresponding to a more accurate linear approximation, in iteratively performing (8) linear regressions with the aid of a sliding window of length equal to the second phase span $L_2$ so as to eliminate the residual phase jumps so as to perform (9) a quadratic regression over the remaining phases and so as to calculate an overall estimate of the reference phases of the signals of each block, and in performing (10) a comparison of the mean square error between the estimated reference phases and the raw phases obtained by linear regression.

2. Process according to Claim 1, **characterized in that** the elimination (5) of the unknown phases consists in respect of a modulation with two phase states (0-π) in correcting the phases of the samples $S_n$ while bringing them into the phase interval

$$\left[-\frac{\pi}{2},+\frac{\pi}{2}\right],$$

in calculating the successive phase differences while bringing them too into the phase interval

$$\left[-\frac{\pi}{2},+\frac{\pi}{2}\right]$$

and in reconstructing a string $\Phi_n$ of values of phases representative of the reference phase of the signal.

3. Process according to either of Claims 1 and 2, **characterized in that**, to search for the first phase span, it consists in calculating by linear regression over the length L the mean square phase error by taking in succession each of the signals $S_n$ as origin and in choosing for origin that which gives the minimum mean square error.

4. Device for the blockwise coherent demodulation of strings of complex signals $S_n$ phase-modulated according to specified phase states, **characterized in that** it comprises a device (2) for storing the complex signals coupled to a device (3) for estimating the reference phase of the signal and a device (4) coupled to the phase estimating device (3) so as to reconstruct the complex samples and decode the information transmitted by the samples, the device (3) for estimating the reference phase of the signal being programmed so as to extract (5) the phase of each of the complex signals while eliminating the unknown phase jumps, search (6) through the string of phases obtained for a first phase span of specified length L for which the phase variation is as linear as possible, determine (7) a second span of phases of length $L_2$ greater than L corresponding to a more accurate linear approximation, iteratively perform (8) linear regressions with the aid of a sliding window of length equal to the second phase span $L_2$ so as to eliminate the residual phase jumps so as to perform (9) a quadratic regression over the remaining phases and so as to calculate an overall estimate of the reference phases of the signals of each block, and perform (10) a comparison of the mean square error between the estimated reference phases and the raw phases obtained by linear regression.

## Patentansprüche

1. Verfahren zur kohärenten Demodulation von Blöcken aus Folgen von komplexen Signalen $S_n$, die gemäß be-

stimmten Phasenzuständen phasenmoduliert sind, **dadurch gekennzeichnet**, daß es darin besteht, die Phase jedes der komplexen Signale herauszuziehen (5), indem die unbekannten Phasensprünge unterdrückt werden, in der Folge von erhaltenen Phasen einen ersten Phasenbereich einer bestimmten Länge L zu suchen (6), für den die Phasenveränderung möglichst linear ist, einen zweiten Bereich von Phasen einer Länge $L_2$>L entsprechend einer genaueren linearen Approximation zu bestimmen (7), iterativ lineare Regressionen mithilfe eines gleitenden Fensters einer Breite gleich der des zweiten Phasenbereichs $L_2$ durchzufilhren (8), um die verbliebenen Phasensprünge zu unterdrücken, eine quadratische Regression bezüglich der verbleibenden Phasen durchzuführen (9), um eine globale Schätzung der Bezugsphasen der Signale jedes Blocks zu berechnen, und einen Vergleich des mittleren quadratischen Fehlers zwischen den geschätzten Bezugsphasen und den groben Phasen durchzuführen (10), die durch lineare Regression erhalten wurden.

**2.** Verfahren nach Anspruch 1, **dadurch gekennzeichnet**, daß die Unterdrückung der unbekannten Phasensprünge (5) für eine Modulation mit zwei Phasenzuständen (0 und $\pi$) darin besteht, die Phasen der Tastproben $S_n$ zu korrigieren, indem man sie in das Phasenintervall [$-\pi/2$, $+\pi/2$] bringt, die aufeinanderfolgenden Phasenunterschiede berechnet, indem man sie auch in das Phasenintervall [$-\pi/2$, $+\pi/2$] bringt, und eine Folge $\Phi_n$ von Phasenwerten rekonstruiert, die für die Bezugsphase des Signals repräsentativ sind.

**3.** Verfahren nach einem beliebigen der Ansprüche 1 und 2, **dadurch gekennzeichnet**, daß es zur Suche nach dem ersten Phasenbereich darin besteht, durch lineare Regression über die Länge L den mittleren quadratischen Phasenfehler zu berechnen, indem nacheinander jedes der Signale $S_n$ als Anfang genommen wird, und dasjenige als Anfang auszuwählen, das den geringsten mittleren quadratischen Fehler ergibt.

**4.** Vorrichtung zur kohärenten Demodulation von Blöcken aus Folgen kohärenter Signale $S_n$, die gemäß bestimmten Phasenzuständen moduliert sind, **dadurch gekennzeichnet**, daß sie eine Speichervorrichtung (2) zur Speicherung der komplexen Signale, die mit einer Vorrichtung (3) zum Schätzen der Bezugsphase des Signals gekoppelt ist, und eine Vorrichtung (4) aufweist, die an die Vorrichtung (3) zur Schätzung der Phase gekoppelt ist, um die komplexen Tastproben zu rekonstruieren und die von den Tastproben übertragene Information zu dekodieren, wobei die Vorrichtung (3) zum Schätzen der Bezugsphase des Signals so programmiert ist, daß sie die Phase jedes der komplexen Signale herauszieht (5), indem die unbekannten Phasensprünge unterdrückt werden, in der Folge von erhaltenen Phasen einen ersten Phasenbereich einer bestimmten Länge L sucht (6), für den die Phasenveränderung möglichst linear ist, einen zweiten Bereich von Phasen einer Länge $L_2$>L entsprechend einer genaueren linearen Approximation bestimmt (7), iterativ lineare Regressionen mithilfe eines gleitenden Fensters einer Breite gleich der des zweiten Phasenbereichs $L_2$ durchzuführen (8), um die verbliebenen Phasensprünge zu unterdrücken, eine quadratische Regression bezüglich der verbleibenden Phasen durchführet (9), um eine globale Schätzung der Bezugsphasen der Signale jedes Blocks zu berechnen, und einen Vergleich des mittleren quadratischen Fehlers zwischen den geschätzten Bezugsphasen und den groben Phasen durchführt (10), die durch lineare Regression erhalten wurden.

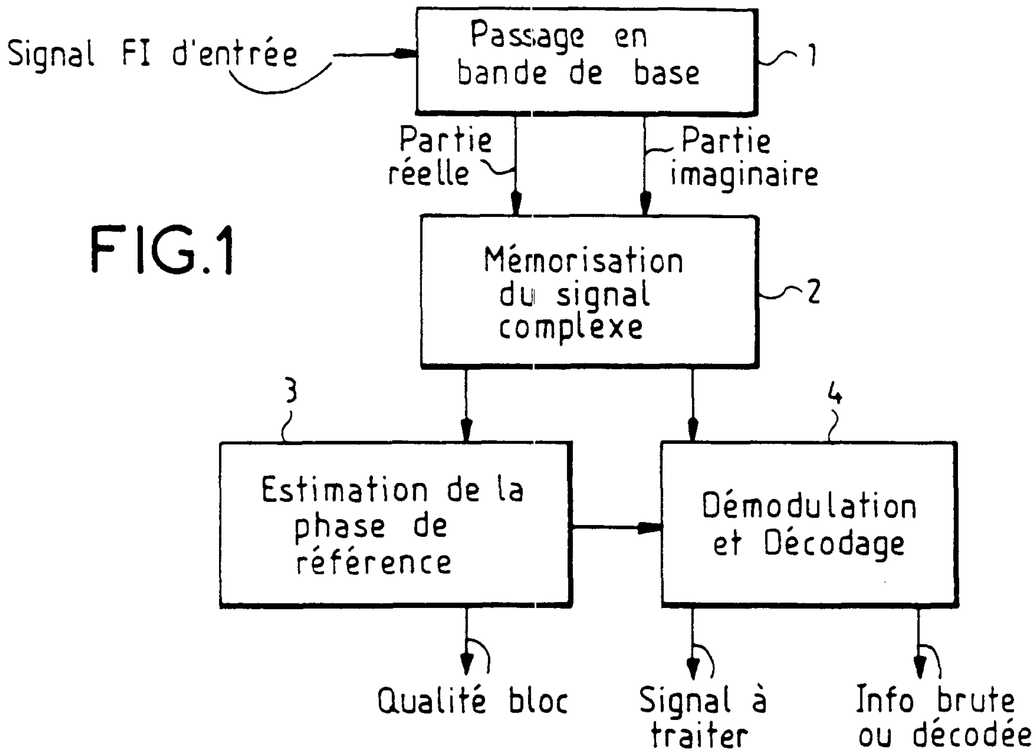
Signal FI d'entrée
Passage en bande de base
1
Partie réelle
Partie imaginaire
Mémorisation du signal complexe
2
3
4
Estimation de la phase de référence
Démodulation et Décodage
Qualité bloc
Signal à traiter
Info brute ou décodée

FIG.1

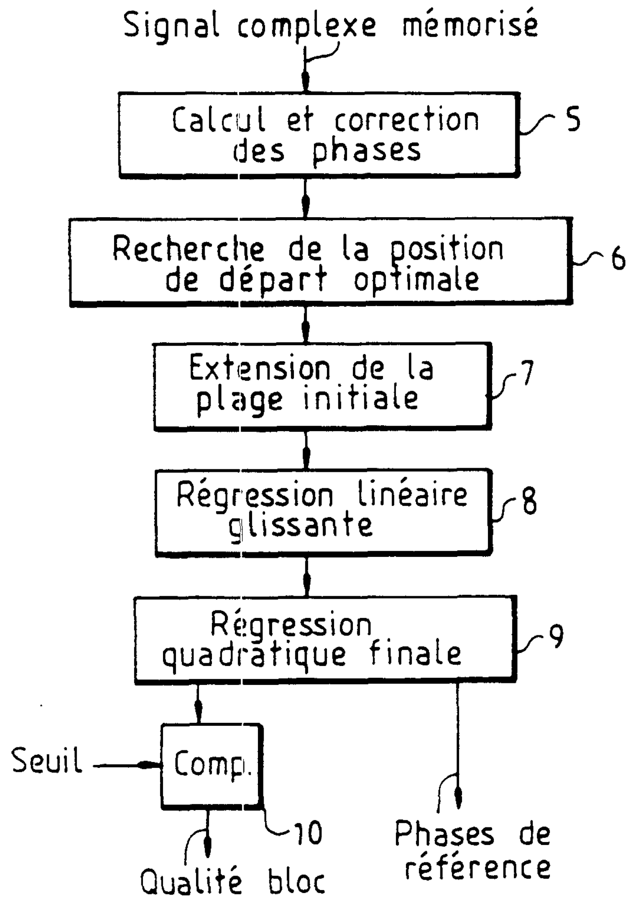
Signal complexe mémorisé
Calcul et correction des phases
5
Recherche de la position de départ optimale
6
Extension de la plage initiale
7
Régression linéaire glissante
8
Régression quadratique finale
9
Seuil
Comp.
10
Qualité bloc
Phases de référence

FIG.2

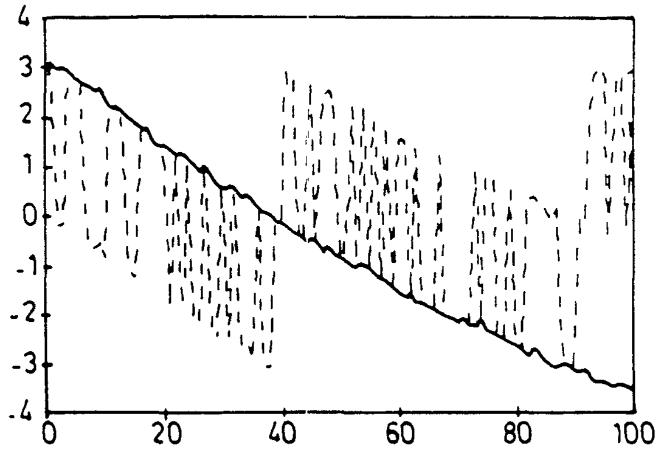


FIG.3A

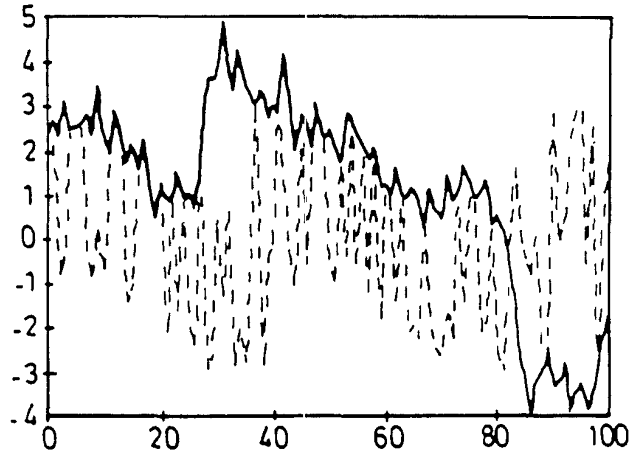


FIG.3B

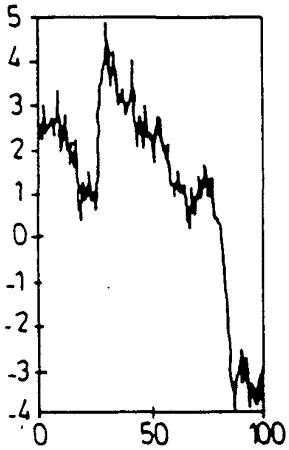


FIG.4A

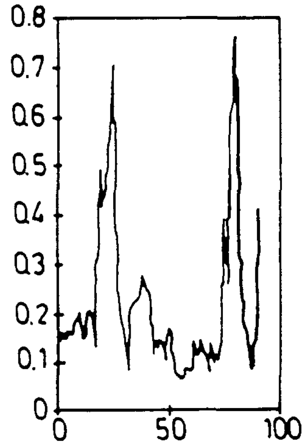


FIG.4B

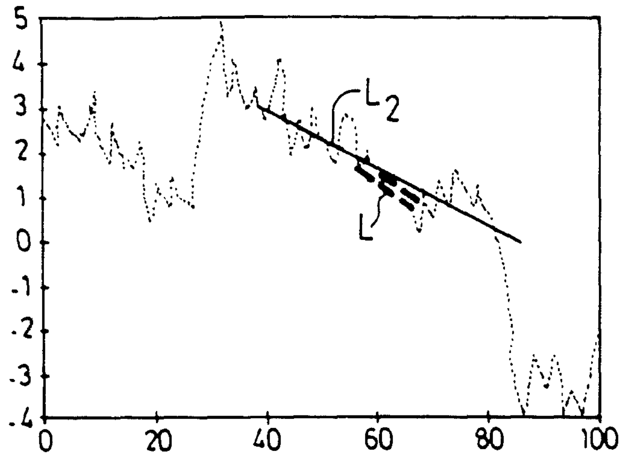


FIG.5

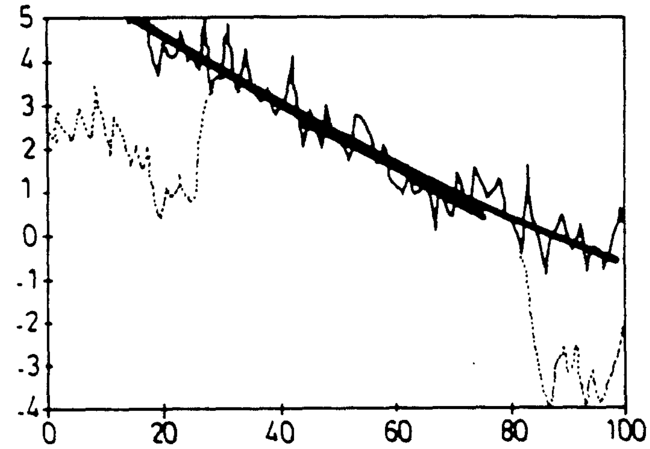


FIG.6

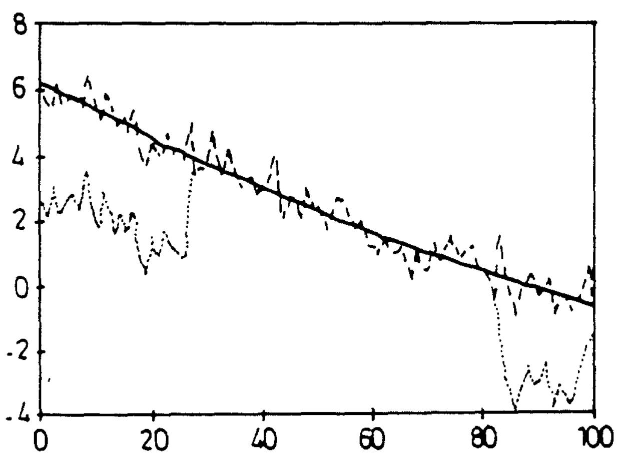


FIG.7

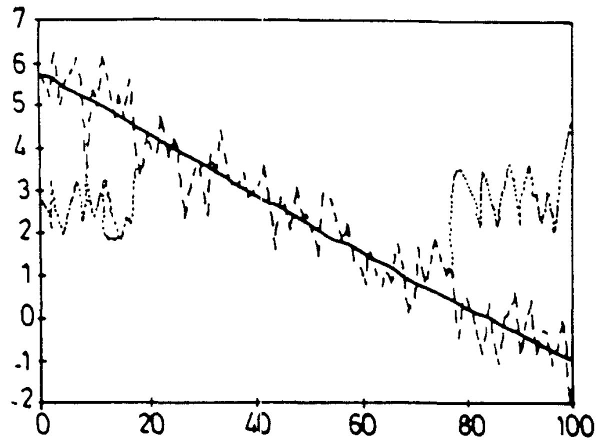


FIG. 8

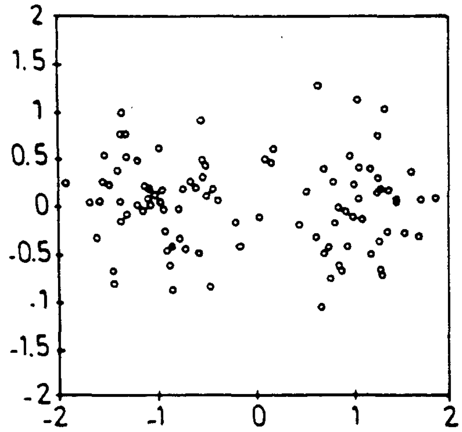


FIG.9A

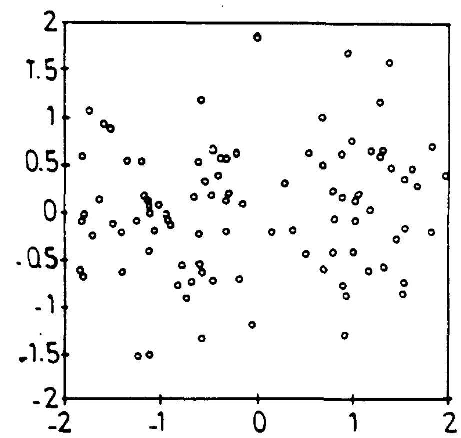


FIG.9B

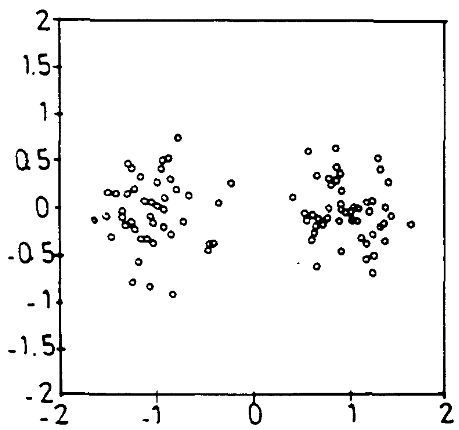


FIG.9C

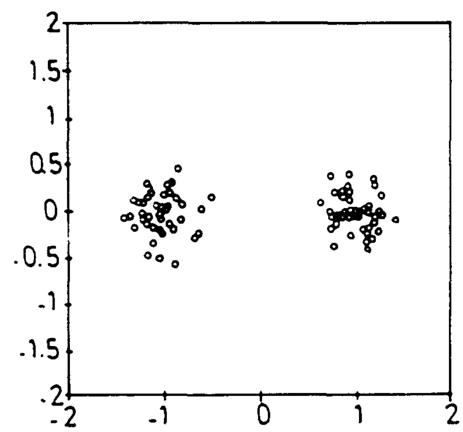


FIG.9D